Europäisches Patentamt

European Patent Office

Office européen des brevets

(19)

(11) EP 0 796 229 B1

(12) EUROPÄISCHE PATENTSCHRIFT

(45) Veröffentlichungstag und Bekanntmachung des Hinweises auf die Patenterteilung:
21.10.1998 Patentblatt 1998/43

(21) Anmeldenummer: 95940995.4

(22) Anmeldetag: 22.11.1995

(51) Int Cl.6: C03B 23/047, C03B 23/057, G21K 1/06

(86) Internationale Anmeldenummer:
PCT/EP95/04591

(87) Internationale Veröffentlichungsnummer:
WO 96/18584 (20.06.1996 Gazette 1996/28)

(54) **VERFAHREN ZUR HERSTELLUNG VON GLASKAPILLAREN UND DEREN VERWENDUNG**

PROCESS FOR MANUFACTURING GLASS CAPILLARIES AND USES OF THE CAPILLARIES

PROCEDE DE FABRICATION DE TUBES CAPILLAIRES EN VERRE, ET UTILISATION DE CES TUBES CAPILLAIRES

(84) Benannte Vertragsstaaten:
AT CH DE FR GB LI

(30) Priorität: 10.12.1994 DE 4444102

(43) Veröffentlichungstag der Anmeldung:
24.09.1997 Patentblatt 1997/39

(73) Patentinhaber: Forschungszentrum Karlsruhe GmbH
76133 Karlsruhe (DE)

(72) Erfinder:
• KNÖCHEL, Arndt
D-22393 Hamburg (DE)
• GAUL, Gerhard
D-25436 Tornesch (DE)
• LECHTENBERG, Frank
D-25451 Quickborn (DE)

(74) Vertreter: Rückert, Friedrich, Dr.
Forschungszentrum Karlsruhe GmbH
Patente und Lizenzen
Weberstrasse 5
76133 Karlsruhe (DE)

(56) Entgegenhaltungen:
WO-A-95/23770                    GB-A- 1 096 361
US-A- 5 101 422

• J. SYNCHROTRON RAD., Bd. 1, 1994 GB, Seiten 37-42, XP 000565308 D.H.BILDERBACK ET AL. 'X-ray Applications with Glass-Capillary Optics' in der Anmeldung erwähnt
• PATENT ABSTRACTS OF JAPAN vol. 17 no. 461 (P-1598) ,23.August 1993 & JP,A,05 107571 (SHOWA ELECTRIC WIRE & CABLE CO. LTD.) 30.April 1993,

**Beschreibung**

Die Erfindung betrifft ein Verfahren zur Herstellung von Kapillaren nach dem Oberbegriff des Patentanspruchs 1, sowie deren Verwendung.

Die Kapillartechnik fand ihren Ursprung 1970, als erstmals zylindrische Kapillaren zur Strahl leitung bei Röntgenröhren verwendet wurden. Anfang der 80er Jahre wurden konische Kapillaren zur Fokussierung eingesetzt. Diese Kapillaren können Röntgenstrahlung von 4 bis 8 keV fokussieren.

Aus D. H. Bilderback et al. : X- Ray Applications with Glass-Cappillary Optics, J. Synchrotron Rad. (1994) 1, 37 - 42 ist die Verwendung von sich nadelförmig verengenden Kapillaren aus Glas zur Fokussierung von Röntgenstrahlung bekannt. Es wird jedoch darauf hingewiesen, daß sich die gewünschte Form nur unzulänglich erreichen läßt. Zur Verbesserung der Fokussierungseigenschaften wird daher die Verwendung von zwei Kapillarelementen vorgeschlagen.

In der GB-A-1096361 wird die Herstellung von Kapillaren beschrieben, deren Öffnung einen Durchmesser von weniger als 50 µm aufweist. Hierzu werden Röhren benutzt, deren Innendurchmesser einen Durchmesser von nicht mehr als 100 µm aufweist. In dieser Röhre wird nun eine Luftblase durch Erwärmen eingeschlossen. Bei einer nachfolgenden Erwärmung des Bereichs bis zur Dünnflüssigkeit des Materials dehnt sich die Luftblase aus und bildet einen länglichen Hohlraum mit spitz zulaufenden Enden.

In einem weiteren Schritt wird aus diesem Hohlraum eine Kapillare gezogen. Diese Kapillare endet zwar auch in Spitzen, weist jedoch keine elliptische Form auf.

Aus Patent Abstracts of Japan, Band 17, Nr. 461 (P-1598) 23/08/93, von JP, A, 05 107 571 ist ein Verfahren zum Ziehen von Kapillaren bekannt.

Des weiteren wird in J. Synchrotron Rad., Band 1, 1994, Seiten 37 bis 42 auf die schlechten Fokussiereigenschaften von unzureichend ausgebildeten Elementen hingewiesen.

In der EP-A-0 748 299, die unter Artikel 54(3) EPÜ fällt, wird die Herstellung durch Ziehen von Kapillaren zur Fokussierung von Röntgenstrahlung beschrieben.

Aufgabe der Erfindung ist es, ein Verfahren der e. g. Art so auszugestalten, daß damit Kapillaren mit optimalen Fokussierungseigenschaften hergestellt werden können.

Gelöst wird diese Aufgabe durch die kennzeichnenden Merkmale des Patentanspruchs 1. Die Unteransprüche beschreiben vorteilhafte Ausgestaltungen des Verfahrens.

Durch die Verwendung der ellipsoidischen Kapillarform und schwermetallhaltiger Gläser wird die Fokussierung harter Röntgenstrahlung möglich.

Bei einem Anteil von mindestens 40 Gew-% PbO oder eines anderen schweren Elements im Glas kann Röntgenstrahlung bis ca. 80 keV fokussiert werden.

Das Ziehverhalten von Gläsern wird bestimmt durch:

- das Expansionsverhalten im Ziehbereich, durch die Poissonzahl µ
- den Erweichungsbereich (Transformationsbereich)
- den Ziehbereich (ca. 150 - 200° höher als der Erweichungsbereich)
- das Temperaturintervall, in dem die Viskosität zwischen 104 und 108 Poise liegt.

Erstreckt sich dieser letztere Bereich über ein größeres Temperaturintervall, was einer zeitlich langsameren Viskositätsänderung entspricht, spricht man von einem "langen" Glas. Das Gegenteil ist ein "kurzes" Glas. Steigender Schwermetall-, speziell Bleigehalt

- senkt den Beginn von Erweichungs- und Ziehbereich und vergrößert diese Bereiche,
- vergrößert das Temperaturintervall, in dem die für das Ziehen notwendige Viskosität von 104 und 108 Poise vorliegt und
- verlängert damit die Bearbeitungszeit.

Schwermetallzusätze erhöhen nicht nur das Reflexionsvermögen für Röntgenstrahlung, sondern verbessern auch die Möglichkeiten zur Kapillarherstellung durch tiefere Betriebstemperatur und längere Interventionszeit ("langes" Glas). Die Kapillaren werden dadurch dünner, homogener und glatter. Bei der Herstellung sind niedrigere Betriebstemperaturen und höhere Ziehgeschwindigkeiten möglich.

Der Schwermetallgehalt sollte so hoch sein, daß eine optimale Fokussierung der verwendeten Röntgenstrahlung erreicht wird. Der Schwermetallgehalt kann zwischen 0 und 60 Gew-% liegen.

Die ideale Kapillarform ergibt sich anhand elementarer geometrischer Überlegungen und anschließender detaillierter Berechnungen. Die Strahlen, welche den größten Abstand von der optischen Achse und den weitesten Weg zum Fokuspunkt haben, müssen als erstes reflektiert werden, da sonst ihre Reflexionswinkel zu groß würden. Je geringer der Abstand von der optischen Achse, desto später im Verlauf der Kapillare kann die Reflexion erfolgen. Diese Betrachtungen führen zu einer Hohlraumform, deren Krümmungsradius am Eintrittsende groß und am Austrittsende kleiner ist (konvexe Form). Konvexe Formen sind z. B. der Paraboloid und der Ellipsoid.

Der Paraboloid vereinigt parallel einfallende Strahlung in einem Punkt, während der Ellipsoid Strahlung bündelt, die von einer Punktquelle ausgeht. Im Falle der von einer Röntgenröhre oder einem Synchrotron emittierten Strahlung muß eher von einer Punktquelle ausgegangen werden. Der Ellipsoid wird daher als die ideale Form erachtet.

Bei einer exakten Punktquelle vereinigt der Ellipsoid die Strahlen, die in seinem einen Brennpunkt entstehen, in den anderen. Im Falle einer realen Röntgenquelle kann nicht von einer exakten Punktquelle ausgegangen werden. Der Durchmesser des Elektronenstrahls am Strahl L des Synchrotrons DORIS III (Hasylab am DESY Hamburg), beträgt 1 mm, bei einer Feinfokusröhre können 0,1 mm erreicht werden. In diesen Fällen wurde durch eingehendere Rechnungen die Ellipse als Idealform bestätigt.

Die Erfindung wird im folgenden anhand eines Ausführungsbeispiels mit Hilfe der Figuren näher erläutert.

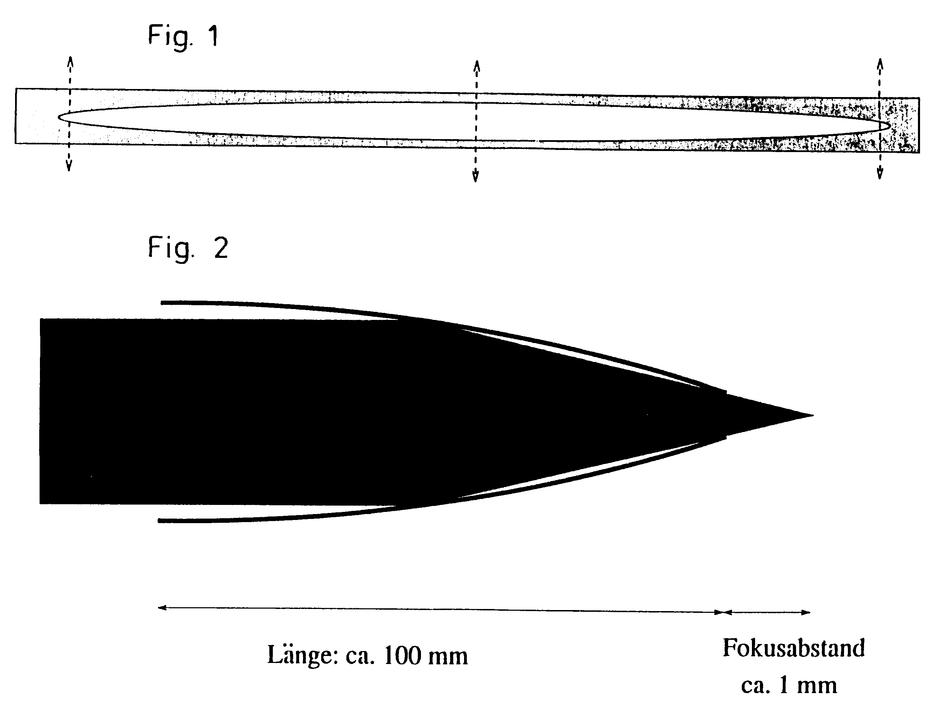

Dabei zeigt die Fig. 1 ein gezogenes Ellipsoid und die Fig. 2. ein Beispiel mit Bemaßung.

Die Herstellung der Kapillaren erfolgt in einem mehrstufigen Verfahren. Im ersten Schritt wird eine Gasblase in einen Glasstab eingeschmolzen. Im anschließenden Ziehprozeß wird die Blase verlängert, wobei ihr Durchmesser schrumpft. Der entstehende Ellipsoid besitzt ein Halbachsenverhältnis von mindestens 1.000 : 1. In einem letzten Schritt wird die Kapillare in der Mitte zerteilt und es werden die beiden Enden geöffnet. Die drei Ebenen für diese Trennoperationen sind in der Fig. 1 dargestellt.

In einem ersten Schritt wird in einen Glasstab ein Hohlraum eingeschmolzen, der durch die Oberflächenspannung perfekte sphärische Symmetrie erlangt. Die Erzeugung dieses Hohlraums erfolgt aus einem Glasrohr, welches zunächst an einer Stelle durch Erhitzen kollabiert wird. In einiger Entfernung wird das Rohr ein zweites Mal kollabiert. Der entstandene Hohlraum besitzt zu diesem Zeitpunkt genau das Volumen, welches später der sphärische Einschluß aufweisen wird. Durch die Wahl dieses Volumens, d.h. durch den Abstand der beiden kollabierten Punkte voneinander wird das Gesamtvolumen der entstehenden Kapillaren festgelegt. Das Volumen berechnet sich als das eines Zylinders mit dem Durchmesser gleich dem Innendurchmesser des verwendeten Glasrohrs und der Länge des unbeeinflußten Rohres zuzüglich der kegelförmig zulaufenden Teilstücke an den beiden kollabierten Stellen.

Sei

d der Durchmesser des Rohres, 1 die Länge des zylindrischen Teils des Einschlusses, 1' die Länge eines der beiden kegelförmigen Endstücke, V das Volumen des Einschlusses, dann gilt:

$$V = 1/4\pi * pd2(1 + 2/3\ 1') \qquad (3.1)$$

Die Kenntnis des eingeschmolzenen Volumens erlaubt die Berechnung des Durchmessers des entstehenden sphärischen Hohlraums.

Sei

r der Radius des sphärischen Hohlraums, π die Zahl Pi, dann gilt:

$$VKugel = 4/3\ \pi\ r3 \qquad (3.2)$$

$$r = (3VKugel/4\pi)1/3$$

Wie weiter unten beschrieben wird, läßt sich aus dem Radius des Hohlraumes und den Prozeßbedingungen die Form der Kapillare vorhersagen. Die Abmessungen ergeben sich darüber hinaus aus den noch folgenden Gleichungen (3.3).

Der Glasstab wird in einem zweiten Schritt mit Hilfe einer Kapillarziehmaschine durch einen ggf. computergesteuerten Glasziehprozeß verstreckt. Die Kapillarziehmaschine vom Typ GDM-1B der Firma Herbert Arnold in Weilburg/Lahn verfügt in ihrer Grundausstattung über einen durch ein Getriebe in 10 Stufen verstellbaren Zutrieb mit einer Geschwindigkeit von 5 - 25 mm/min, einen elektrisch beheizten Ofen mit einer Temperatur bis 950° C und einer Konstanz von besser als 5°, sowie einen konstanten Abtrieb mit 800 mm/min. Daraus ergibt sich ein Verstreckungsverhältnis von 32 : 1 bis 160 : 1.

Für den Ziehprozeß sind entsprechend des verwendeten Glastyps Temperatur (und damit die Viskosität) und Vorschub so aufeinander abzustimmen, daß der mathematisch beschreibbare Übergang von einer Kugel zu einem langgestreckten Ellipsoiden gemäß Fig. 1 realisiert wird.

Sei

n  das Verstreckungsverhältnis,
d  der Durchmesser des Hohlraums,
l  die Länge des Ellipsoiden,
d'  der Durchmesser des Ellipsoiden,

dann gilt:

$$l = d * n \qquad (3.3)$$

$$d' = d / n1/2$$

Die Ellipse wird durch die beiden Variablen a und b charakterisiert, welche die große bzw. kleine Halbachse bemaßen. Der Abstand der beiden Foki einer Ellipse beträgt 2c, wobei sich c zu (a2 - b2)1/2 ergibt.

Der entstandene ellipsoidische Hohlraum besitzt mit den Variablen der vorstehenden Gleichung ein Halbachsenverhältnis gemäß folgender Gleichung:

$$a/b = l/d' = n3/2 \qquad (3.4)$$

Konkret für den Fall der mit der Kapillarziehmaschine GDM-1B möglichen Verstreckungen ergeben sich folgende Halbachsenverhältnisse:

Verhältnis a:b = 32:1 => 181 : 1
Verhältnis a:b = 160:1 => 2024 : 1

Durch mittiges Teilen und Abschneiden der Endstücke erhält man die betriebsfertigen Kapillaren.

Aus dem Halbachsenverhältnis läßt sich der Abstand der Fokalebene vom Ende des ellipsoidischen Hohlraums berechnen.

Sei

a:b das Halbachsenverhältnis,
f der Abstand der Fokalebene,
dann gilt:

$$f = a - c \qquad (3.5)$$

$$c = (a2 - b2)1/2$$

$$f = a - (a2 - b2)1/2 = a * (1 - (1 - (b/a)2)1/2)$$

Da bei den hier vorliegenden Kapillaren das Halbachsenverhältnis mindestens 1000:1 beträgt, kann der Term (b/a)2 < 10-6 vernachlässigt werden. Damit ergibt sich:

$$c = a \qquad (3.6)$$

Die Fokalebene liegt also nahezu am Ende der Kapillare. Aus dem geforderten Arbeitsabstand von 1 mm ergibt sich die Öffnung der Kapillare am Ausgang gemäß nachstehender Gleichung.

Sei

n     das Verstreckungsverhältnis,
a     die große Halbachse,
döff     der Austrittsdurchmesser,

dann gilt:

$$döff = ((2a-1)/n3)1/2 \qquad (3.7)$$

Die Fig. 2 zeigt eine ellipsoidische Kapillare mit einem PbO Gehalt von etwa 40 Gew-%, mit der die Fokussierung von Röntgenstrahlung im Spektralbereich von 0 - 80 keV gelingt.

Bei Vorliegen einer Ausgangskugel von 1,5 mm Durchmesser liefert z. B. ein Verstreckungsverhältnis von 160 : 1 Kapillaren von 12 cm Länge, 118µm Eingangs- und ca. 15,2 µm Ausgangsdurchmesser. Der Ausgangsdurchmesser ist kein Maß für den Brennfleckdurchmesser. Er beschreibt lediglich die Fläche, die von einem Halo beschienen wird. Mehrfachverstreckungen sind möglich, um Ausgangsdurchmesser von weniger als 1µm zu erhalten. Bei der Mehrfachverstreckung läßt man jeweils die vorher gezogene Kapillare erkalten und führt den oben beschriebenen Prozess ein weiteres Mal durch. Die Gleichungen (3.3) bleiben gültig, wobei die Länge und der Durchmesser des in den Prozeß zu führenden Ellipsoiden anstelle des Kugeldurchmessers eingesetzt werden müssen.

Der Außendurchmesser des Glasrohres bestimmt sich nach denselben Gesetzen wie der Innendurchmesser. Zur Zeit werden Glasstäbe mit anfänglich 10 mm eingesetzt. Es entstehen somit Kapillaren mit 0,8 mm Außendurchmesser, welche mechanisch stabil genug sind, um unproblematisch handhabbar zu sein.

Bei diesem Verfahren werden zusätzlich eventuell vorhandene Oberflächenrauhigkeiten bis in den Bereich kleiner 1 nm "glattgezogen", so daß auch harte Röntgenstrahlung an der Oberfläche totalreflektiert wird.

Auf diese Weise werden auf einfache Weise Kapillaren zugänglich, deren Eigenschaften optimal den jeweils herrschenden Bedürfnissen angepaßt werden können.

Das oben beschriebene Verfahren kann durch einen Computer gesteuert werden. Dabei wird der ehemals konstante Abtrieb in seiner Geschwindigkeit variabel gemacht. Mit Hilfe eines computergesteuerten Getriebeschrittmotors kann jedes gewünschte Verstreckungsverhältnis stufenlos gewählt werden. Aus den Gleichungen (3.3) ergibt sich der Zusammenhang zwischen dem Verstreckungsverhältnis und der sich daraus ergebenden Endform der Kapillare. Werden die beiden Gleichungen durcheinander dividiert, so erhält man:

$$l/d' = n1/2 \qquad (4.1)$$

Für einen Ellipsoiden kann dieses Verhältnis für jeden Teilabschnitt berechnet und als Funktion angegeben werden:

$$n = (a2y2)/(b4 - y2b2) \qquad (4.2)$$

Der Computer berechnet daraus das Verstreckungsverhältnis als Funktion der Zeit und gibt diese Information an die Steuerung des Schrittmotors weiter. Entsprechend der Vorgaben wird die Kapillare der Maschine entnommen.

Die Kapillaren wurden bislang am Deutschen Elektronensynchrotron (DESY) in Hamburg für die Röntgenfluoreszenzanalyse eingesetzt. Dabei haben die verwendeten Kapillaren (1 = 107 mm, d' = 75 µm und dÖff = 5 µm) die theoretisch vorhergesagten Eigenschaften gezeigt.

Strahldurchmesser 3,7 µm

Strahlungsflußdichte 40fach höher als im Primärstrahl

Enegiespektrum von 0 - 80 keV

Die Verwendung von Kapillaren mit geringerem Durchmesser führt zu kleineren Strahlungsquerschnitten z. B. 0,1 µm bei Erhalt der übrigen Eigenschaften.

Der Einsatz der ellipsoidischen Kapillaren an Röntgenröhren ist ebenfalls möglich. Damit eröffnet sich eine weitaus größere Zahl von Anwendern.

In der Röntgenbeugung und -fluoreszenz mit Röhren bedeutet jeder Gewinn an Intensität eine Verkürzung der Meßzeiten, da diese in den allermeisten Fällen ausschließlich durch die Intensität der Anregungsstrahlung bestimmt werden.

Damit ergeben sich durch Einsatz des hier vorgestellten Verfahrens Verbesserungsmöglichkeiten auf folgenden Gebieten:

- Röntgendiffraktion an Kristallen
- Strukturaufklärung von Biogroßmolekülen durch Diffraktion
- Ortsaufgelöste Röntgenfluoreszenz mit Röhren
- Verbesserung der Nachweisgrenzen bei der Röntgenfluoreszenz
- Medizinische Anwendungen, bei denen kleine Strahlquerschnitte erforderlich sind
- Mikrotomographie
- Röntgenabsorption im Mikro- und Nanobereich
- Röntgenlithographie
- Röntgenmikroskopie.

## Patentansprüche

1. Verfahren zur Herstellung von Glaskapillaren durch Erhitzen und Ziehen einer Glasröhre, wobei durch Erhitzen der Glasröhre diese an zwei benachbarten Positionen durch Kollabieren verschlossen wird, dadurch gekennzeichnet, daß die Glasröhre erst an einer, dann an einer benachbarten Position erhitzt und durch Kollabieren verschlossen wird, der gesamte Bereich der Glasröhre zwischen den beiden kollabierten Stellen erhitzt wird, wobei sich durch die Oberflächenspannung ein kugelförmiger Hohlraum sphärischer Symmetrie bildet und dieser Hohlraum in eine langgestreckte Form gezogen wird, wobei die Temperatur während des Ziehprozesses innerhalb eines Bereiches von kleiner als 5° C konstant gehalten und durch die Abstimmung von Ziehtemperatur und Ziehgeschwindigkeit ein Ellipsoid gebildet wird.

2. Verfahren nach Anspruch 1, dadurch gekennzeichnet, daß Glassorten mit Schwermetallanteil verwendet werden.

3. Verfahren nach Anspruch 1 oder 2, dadurch gekennzeichnet, daß die Kapillare in der Mitte zerteilt und an ihren Enden geöffnet wird.

4. Verwendung der Kapillaren, hergestellt durch ein Verfahren gemäß Anspruch 3 zur Fokussierung von Röntgenstrahlung.

## Claims

1. Method of producing glass capillaries by heating and drawing a glass tube, wherein, by heating the glass tube, the glass tube is sealed by being collapsed at two adjacent positions, characterised in that the glass tube is initially heated at one position, then heated at an adjacent position and sealed by being collapsed, and the entire region of the glass tube between the two collapsed locations is heated, a ball-shaped cavity of spherical symmetry being formed by the surface tension, and this cavity being drawn into an elongate configuration, the temperature during the drawing process being kept constant within a range of less than 5° C, and an ellipsoid being formed by adjusting the drawing temperature and drawing speed.

2. Method according to claim 1, characterised in that glass types with a proportion of heavy metal are used.

3. Method according to claim 1 or 2, characterised in that the capillary is divided in the middle and opened at its ends.

4. Use of the capillaries, produced by a method according to claim 3, for focussing X-radiation.

## Revendications

1. Procédé de fabrication de tubes capillaires par chauffage et étirage d'un tube de verre, selon lequel, par chauffage du tube de verre on le ferme en deux positions voisines par écrasement, caractérisé en ce qu' on chauffe le tube de verre tout d'abord au niveau de l'une des positions voisines et on le ferme par écrasement,

- on chauffe toute la zone du tube de verre entre les deux points écrasés, ce qui donne par effet des tensions de surface, une cavité sphérique, symétrique, et on étire cette cavité pour lui donner une forme allongée,
- la température au cours du procédé d'étirage étant maintenue constante dans une plage inférieure à 5°C et en accordant la température d'étirage et la vitesse d'étirage, on forme un ellipsoïde.

2. Procédé selon la revendication 1, caractérisé en ce qu'

on utilise des types de verres contenant des métaux lourds.

3. Procédé selon l'une des revendications 1 ou 2, caractérisé en ce qu'
on coupe le tube capillaire au milieu puis on ouvre les extrémités.

4. Application de tubes capillaires obtenus par un procédé selon la revendication 3 pour focaliser des rayons X.

Fig. 1

Fig. 2

Fokusabstand
ca. 1 mm

Länge: ca. 100 mm